# EUROPÄISCHE PATENTSCHRIFT

(11) **EP 1 339 537 B1**
(45) Veröffentlichungstag und Bekanntmachung des Hinweises auf die Patenterteilung: **22.09.2004**
(21) Anmeldenummer: 01989375.9
(22) Anmeldetag: 03.12.2001
(51) Int. Cl.: B29C 45/50, H02K 41/00

(54) **EINSPRITZEINHEIT FÜR EINE SPRITZGIESSMASCHINE**
INJECTION UNIT FOR AN INJECTION MOULDING MACHINE
UNITE D'INJECTION POUR UNE PRESSE D'INJECTION

(30) Priorität: 04.12.2000 DE 10061329
(43) Veröffentlichungstag der Anmeldung: 03.09.2003
(73) Patentinhaber: Mannesmann Plastics Machinery GmbH, 80997 München (DE)
(72) Erfinder: BECKER, Klaus, 58300 Wetter (DE); MEYER, Ralf, Ingo, 58089 Hagen (DE); WEINMANN, Robert, CH-8872 Weesen (CH)
(74) Vertreter: Meissner, Peter E., Dipl.-Ing.
(86) Internationale Anmeldenummer: PCT/DE2001/004593
(87) Internationale Veröffentlichungsnummer: WO 2002/045939

(56) Entgegenhaltungen:
- EP-A- 1 149 682
- DE-A- 19 920 626
- US-A- 6 051 896
- PATENT ABSTRACTS OF JAPAN vol. 1999, no. 08, 30. Juni 1999 (1999-06-30) & JP 11 058468 A (TOSHIBA MACH CO LTD), 2. März 1999 (1999-03-02)

## Beschreibung

Die Erfindung betrifft eine Einspritzeinheit für eine Spritzgießmaschine zur Verarbeitung von Kunststoffen oder anderen plastifizierten Massen gemäß dem Gattungsbegriff des Patentanspruchs 1, bekannt aus der US-A-6 051 896.

Spritzgießmaschinen zur Verarbeitung von z.B. thermoplastischen Kunststoffen sind seit vielen Jahren bekannt. Üblicherweise wird in einer solchen Spritzgießmaschine ein Kunststoffgranulat in einem erwärmten Plastifizierzylinder, in dem eine Schnecke rotiert, erwärmt und aufgeschmolzen und die Schmelze anschließend in den Formhohlraum einer Spritzgießform unter hohem Druck eingespritzt. Das geschmolzene Kunststoffmaterial wird dann abgekühlt, damit es erstarrt und seine endgültige Form erhält. Die abgekühlten Spritzgießteile werden nach dem Öffnen der Form ausgestoßen. Eine Spritzgießmaschine beinhaltet außer ihrer Einspritzeinheit auch eine Schließeinheit zum Öffnen und Schließen der geteilt ausgeführten Spritzgießform. Die Einspritzeinheit beinhaltet außer einem Schneckenzylinder auch eine Einspritzdüse zum Einspritzen des geschmolzenen Materials in die geschlossene Spritzgießform. Im Schneckenzylinder ist eine Schnecke angeordnet, die zur Ausführung der Einspritzfunktion in axialer Richtung hin und her bewegt werden kann, wobei die Länge des axialen Verfahrwegs die eingespritzte Materialmenge unmittelbar bestimmt.

Üblicherweise wird für den Rotationsantrieb der Schnecke ein Elektromotor eingesetzt, wobei vielfach ein mechanisches Getriebe zwischengeschaltet ist. Für die axiale Bewegung der Schnecke beim Einspritzen werden meistens hydraulische Antriebe verwendet.

Insbesondere zur Herstellung kleinerer Spritzgießteile sind in den letzten Jahren Spritzgießmaschinen bekannt geworden, die über einen rein elektrischen Antrieb verfügen. Das heißt, dass auch die axiale Längsbewegung der Schnecke mittels eines Elektroantriebs vorgenommen wird.

Aus der EP 0 723 848 B1 sind mehrere unterschiedliche Ausführungsformen derartiger voll elektrischer Spritzgießmaschinen entnehmbar. Bei einer Gattung von Spritzgießmaschinen ist vorgesehen, dass die Schnecke zusammen mit der mit der Schnecke gekoppelten elektrischen Drehantriebseinheit auf einem Schlitten verfahren werden kann, wobei das Verfahren des Schlittens über einen elektromotorisch angetriebenen Spindeltrieb erfolgt. Es werden hierbei also zwei elektrische Drehantriebe eingesetzt, von denen einer über den Spindeltrieb die Drehbewegung in eine lineare Bewegung für den Einspritzvorgang umsetzt.

Eine andere in der EP 0 723 848 B1 beschriebene Art von Spritzgießmaschinen sieht zwei hintereinander liegende elektrische Hohlwellenmotoren vor, von denen der erste in seinem Rotor eine Spindelmutter für eine Kugelumlaufspindel besitzt, die mit einer an die Schnecke der Spritzgießmaschine unmittelbar angeschlossenen Kugelumlaufspindel zusammenwirkt, während der zweite Elektromotor an seinem Rotor eine Keilwellenmutter aufweist, die mit einer Keilwelle zusammenwirkt, die sich unmittelbar an die Kugelumlaufspindel anschließt. Die Länge der Keilwelle entspricht mindestens dem axialen Verschiebeweg der Schnecke für den Einspritzvorgang. Während der Rückbewegung der Schnecke in der Materialansammlungsphase des Spritzgießzyklus werden beide Motoren mit derselben Geschwindigkeit und im gleichen Drehsinn angetrieben. Infolge des durch die Einspritzdüse gebildeten Gegendrucks wird hierbei die Schnecke linear nach hinten geschoben. Da die Keilwelle im Eingriff mit der Keilwellenmutter steht, bleibt hierbei der Drehantrieb unvermindert erhalten. Während der Einspritzphase wird der Motor für den Drehantrieb stillgesetzt und nur noch der Motor mit der Spindelmutter bewegt. Da die Schnecke sich nicht mehr drehen kann, wird durch die Drehung der Spindelmutter eine axiale Bewegung der Schnecke in Richtung auf die Einspritzdüse erzwungen und das vor der Schnecke angesammelte Schmelzenmaterial in die Spritzgießform eingespritzt.

In der US 6,051,896 wird eine Spritzgießmaschine beschrieben, bei der der Rotationsmotor für den Drehantrieb integral mit einem einzigen Linearmotor ausgeführt ist. Der Aufbau des Linearmotors ist aufwendig, und durch die integrale Ausführung muss der Rotationsmotor speziell angepasst werden.

Die DE 199 20 626 A1 stellt eine Spritzgießmaschine vor, bei der die lineare Vorschubbewegung des Einspritzvorgangs von einem Solenoidmotor erzeugt wird, innerhalb dessen ein Rotationsmotor exakt eingepasst ist. Solenoidmotoren haben den Nachteil, dass Primär- und Sekundärteile des Motors über zylindrische Mantelflächen in Wirkverbindung stehen, die sowohl in der Herstellung als auch in der Wartung aufwendig sind.

Durch Benutzung sind auch bereits Spitzgießmaschinen bekannt geworden, bei denen der Drehantrieb der Schnecke über einen elektrischen Drehmotor und die lineare Verschiebung der Schnecke für den Einspritzvorgang durch einen elektrischen Linearantrieb erzeugt werden. Hierbei sind vier flächige Linearmotoren in Parallelschaltung im Einsatz, wobei die Primärteile der Linearmotoren zu einem quaderförmigen, gehäuseartigen Paket miteinander verbunden sind, während die Sekundärteile auf einem innerhalb dieses Pakets axial beweglichen Quader montiert sind, durch den eine Welle der Schnecke geführt ist. Der elektrische Drehantrieb und die Linearmotoren sind hierbei in axialer Richtung hintereinander angeordnet. Der Vorteil des elektrischen Linearantriebs liegt insbesondere in der hohen Beschleunigungsfähigkeit und dadurch großen Einspritzgeschwindigkeit. Ein Nachteil ist in der vergleichsweise großen axialen Baulänge einer solchen Einspritzeinheit zu sehen.

Aufgabe der vorliegenden Erfindung ist es, eine Einspritzeinheit der gattungsgemäßen Art dahingehend zu verbessern, dass sie bei sehr hoher Einspritzgeschwindigkeit insbesondere zur Herstellung kleinerer bis mittlerer Spritzgießteile eine besonders kompakte und in axialer Richtung möglichst kurze Baulänge aufweist und dabei einfach zu warten ist sowie darüberhinaus flexibel bezüglich der Dimensionierung der Einspritzkraft ist.

Gelöst wird diese Aufgabe bei einer gattungsgemäßen Einspritzeinheit mit den im kennzeichnenden Teil des Patentanspruchs 1 angegebenen Merkmalen. Durch die Merkmale der abhängigen Patentansprüche wird diese Einspritzeinheit in vorteilhafter Weise weiter ausgestaltet.

Die Erfindung geht aus von einer Einspritzeinheit für eine Spritzgießmaschine zur Verarbeitung von Kunststoffen oder anderen plastifizierten Massen, die eine Schnecke aufweist, welche mit einem Drehantrieb mittels eines einen Stator und einen Rotor aufweisenden Drehmotors versehen ist und durch mehrere elektrische Linearmotoren bewegbar ist, die jeweils einen als Stator fungierenden Primärteil und einen linear zu diesem beweglichen Sekundärteil aufweisen. Dabei sind die Linearmotoren zu einem gehäuseartigen Paket mit untereinander paralleler Anordnung der Sekundärteile der Linearmotoren zusammengebaut und die Sekundärteile der Linearmotoren mit der Schnecke antriebstechnisch gekoppelt, so dass lineare Antriebskräfte auf die Schnecke übertragbar sind. Erfindungsgemäß ist vorgesehen, dass der mit der Schnecke in axialer Richtung fest verbundene Drehmotor innerhalb des gehäuseartigen Pakets angeordnet und mit seinem Stator in axialer Richtung fest mit den Sekundärteilen der Linearmotoren gekoppelt ist. Auf diese Weise wird die axiale Baulänge der Einspritzeinheit deutlich verkürzt.

Grundsätzlich kann der Drehmotor für die Rotation der Schnecke von beliebiger Art sein, also beispielsweise ein Hydraulikmotor sein. Besonders bevorzugt werden hierfür aber elektrische Drehmotoren, insbesondere Hohlwellenmotoren, die ein besonders hohes Antriebsdrehmoment bei niedrigem Gewicht ermöglichen. Zweckmäßigerweise ist der elektrische Drehmotor ein Synchronmotor.

Besonders bevorzugt wird eine Ausführungsform, bei der drei Linearmotoren zu dem gehäuseartigen Paket zusammengefasst sind. Zweckmäßig sind die drei Linearmotoren baugleich, so dass sich im axialen Querschnitt des gehäuseartigen Pakets die Form eines gleichseitigen Dreiecks ergibt.

Vorteilhaft ist es, die Sekundärteile der Linearmotoren durch Verbindungselemente zu einer selbsttragenden Baugruppe zusammenzubauen.

Zweckmäßigerweise werden die Sekundärteile jeweils auf einem in Linearführungen geführten Träger angeordnet. Dieser Träger kann beispielsweise jeweils als Schlitten und die Linearführungen können als Gleitschienen ausgebildet sein. Aus Verschleißgründen empfiehlt es sich, den Träger jeweils über Wälzkörper auf den Linearführungen abzustützen, also Gleitreibung möglichst zu vermeiden. Dies kann vorteilhaft auch dadurch gewährleistet werden, dass der Träger als Wagen mit Rädern ausgebildet wird, die auf den Linearführungen rollen.

Die Verbindungselemente für den Zusammenbau der Sekundärteile der Linearmotoren sind vorteilhaft als in axialer Richtung im Abstand hintereinander angeordnete plattenförmige Querträger ausgebildet. Diese Querträger sind senkrecht zur Längsachse der Linearmotoren angeordnet. Dabei ist es vorteilhaft, den elektrischen Drehmotor an dem in Einspritzrichtung vordersten Querträger, also dem der Einspritzdüse am nächsten liegenden Querträger zu befestigen. Dieser Querträger weist einen Durchbruch für die Durchführung der Antriebswelle des Drehmotors oder die Schnecke oder ein entsprechendes Verbindungselement (Kupplung) auf.

Im Hinblick auf die Primärteile der Linearmotoren empfiehlt es sich, diese jeweils am Boden eines im Querschnitt U-förmigen Aufnahmebetts zu befestigen, wobei die Enden der zueinander parallelen Seitenstege der U-Form des Aufnahmebetts die Linearführungen für die Abstützung der Träger der Sekundärteile bilden. Um den mechanischen Zusammenhalt der Aufnahmebetten untereinander zu gewährleisten, können die Aufnahmebetten durch außen an den Seitenstegen der U-Form anliegende Verbindungsleisten fest untereinander verbunden werden.

Nachfolgend wird die Erfindung anhand des in den Figuren teilweise schematisch dargestellten Ausführungsbeispiels einer erfindungsgemäßen Einspritzeinheit näher erläutert. Es zeigen:
- Fig. 1: einen Längsschnitt durch eine erfindungsgemäße Einspritzeinheit,
- Fig. 2: das gehäuseartige Paket von Primärteilen der Linearmotoren aus Fig. 1,
- Fig. 3: die zu einer Baueinheit verbundenen Sekundärteile der Linearmotoren gemäß Fig. 1 und
- Fig. 4: eine perspektivische Ansicht gemäß Fig. 1.

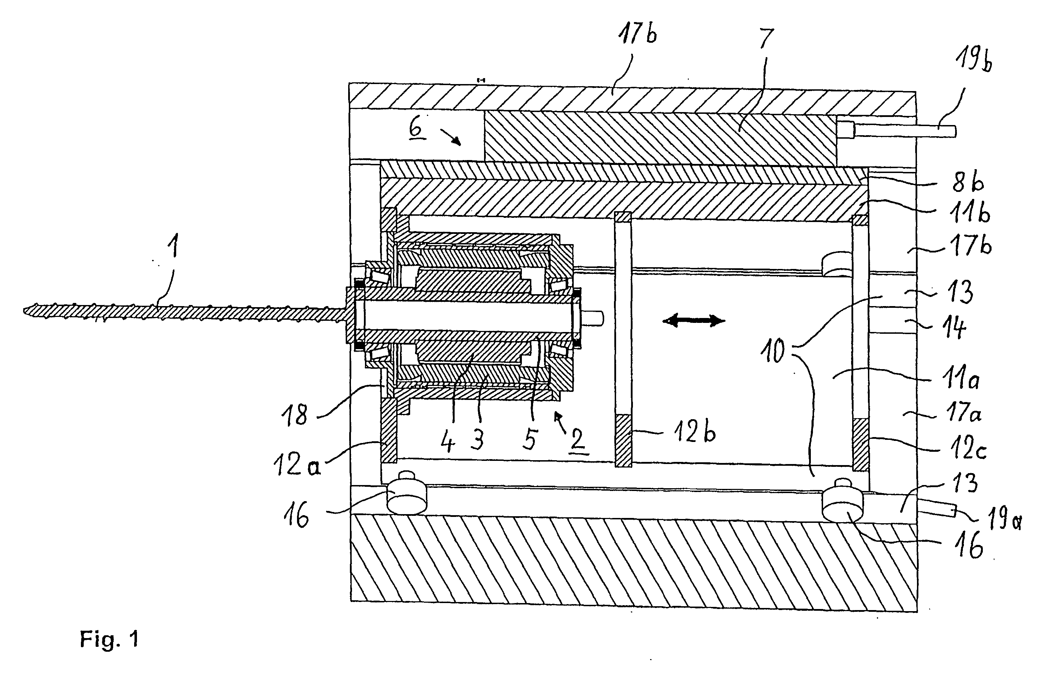

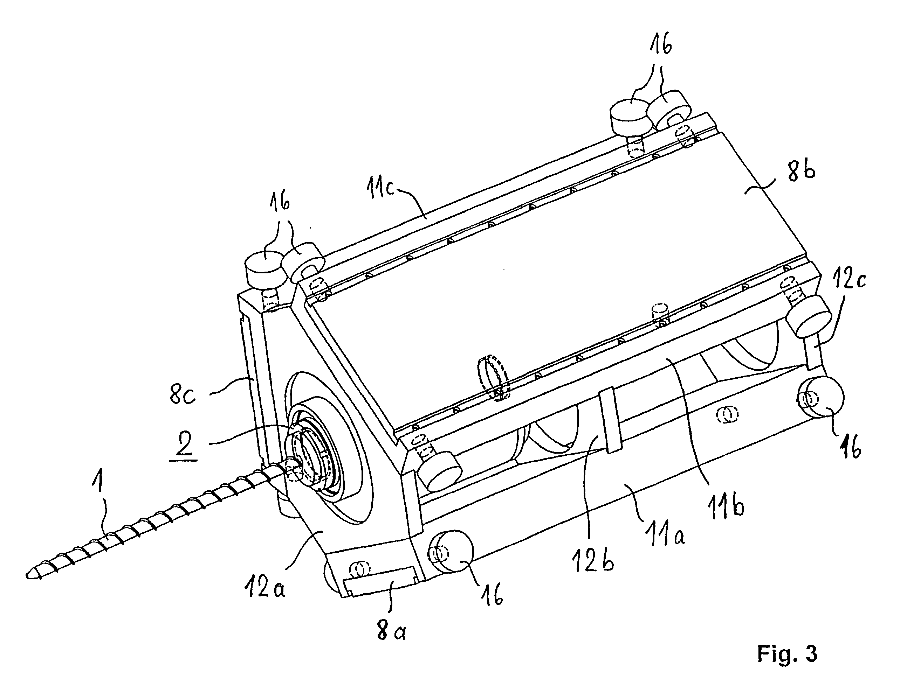

Die in den Figuren 1 bis 4 in verschiedenen Ansichten und Schnitten dargestellte erfindungsgemäße Einspritzeinheit weist eine Schnecke 1 auf, die mit dem Rotor 4 eines elektrischen Hohlwellenmotors 2 verbunden ist. Die Hohlwelle des Motors 2 trägt das Bezugszeichen 5. Der Stator des Hohlwellenmotors 2 ist mit 3 bezeichnet. Der Hohlwellenmotor 2 ist mit seinem Gehäuse und somit auch mit seinem Stator 3 drehfest über einen plattenförmig ausgebildeten Querträger 12a mit einer Baugruppe verbunden, die aus drei Sekundärteilen 8a, b, c, d.h. den beweglichen Teilen von drei elektrischen Linearmotoren 6 gebildet ist. Diese Baueinheit ist in Figur 3 in einer separaten Darstellung besonders gut erkennbar. Die Sekundärteile 8a, b, c sind jeweils in flachen Trägem 11a, b, c gelagert, die die Querschnittsform eines sehr flachen U aufweisen. Die Träger 11a, b, c sind durch drei im axialen Abstand hintereinander angeordnete Querträger 12a, b, c miteinander verbunden. Wie dies bereits aus der Figur 1 deutlich entnehmbar ist, ist der Hohlwellenmotor 2 innerhalb des durch die Träger 11a, b, c eingeschlossenen Volumens angeordnet durch Anflaschung an den vorderen Querträger 12a. Damit die Schnecke 1 bzw. die Hohlwelle 5 nach außen durch den Querträger 12a geführt werden kann, weist dieser einen entsprechend großformatigen Durchbruch 18 auf. Aus Figur 3 ist weiterhin ersichtlich, dass die Träger 11a, b, c im Bereich ihrer kurzen Seitenstege mit Rädern bzw. Rollen 16 versehen sind.

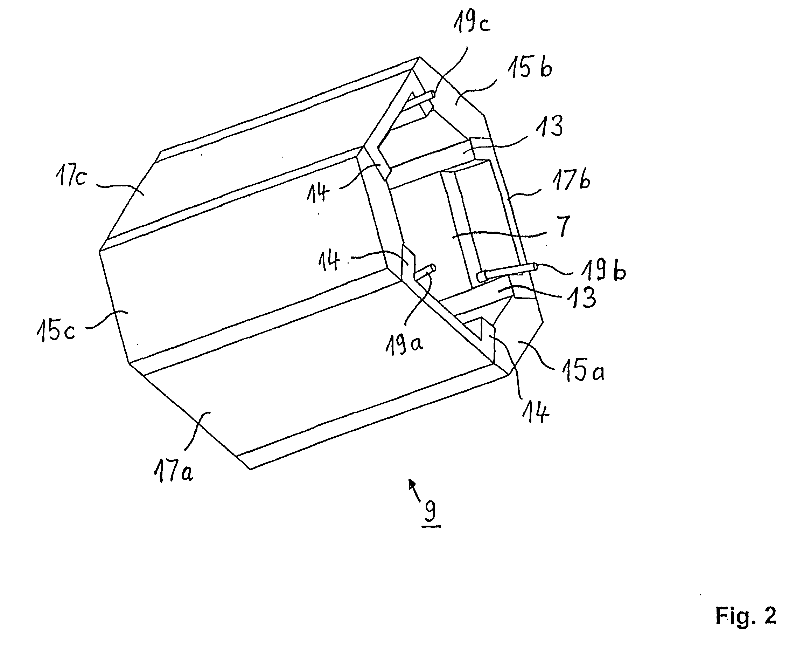

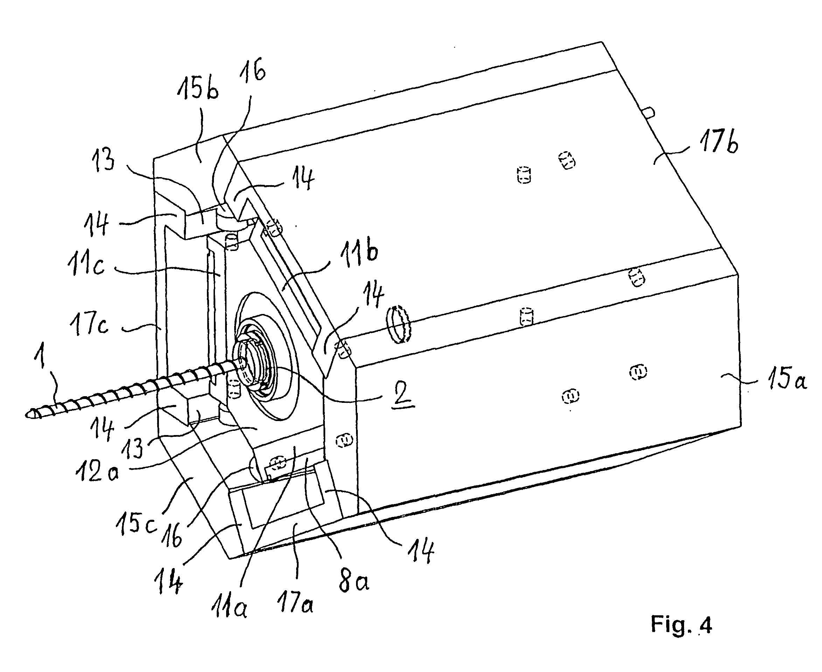

Die Figur 2 zeigt, dass die Primärteile 7, also die feststehenden Teile der elektrischen Linearmotoren 6 zu einem der Form der Baugruppe in Figur 3 entsprechenden gehäuseartigen Paket 9 zusammengebaut sind. Die Primärteile 7, von denen nur ein einziges in der gewählten Ansicht erkennbar ist, sind zu diesem Zweck jeweils in ein Aufnahmebett 17a, b, c eingebettet. Im Prinzip bilden die drei Linearmotoren 6, da sie baugleich ausgeführt sind, im Querschnitt ein gleichseitiges Dreieck. Die Aufnahmebetten 17a, b, c weisen im Querschnitt ähnlich wie die Träger 11a, b, c eine U-Form auf, wobei die Primärteile 7 jeweils am Boden der U-Form (auf der Innenseite) angeordnet sind. Zur Längsseite hin werden die Primärteile 7 durch die Seitenstege 14 eingeschlossen. Die Enden 13 der Seitenstege 14 bilden Linearführungen 10 (Fig. 1), auf denen sich die Räder 16 der Träger 11a, b, c abstützen, wenn die Baueinheit gemäß Figur 3 in das gehäuseartige Paket 9 gemäß Fig. 2 eingesetzt wird, wie dies in Fig. 4 in der perspektivischen Ansicht dargestellt ist. Die Aufnahmebetten 17a, b, c für die Primärteile 7 könnten auch so geformt sein, dass sie unmittelbar beispielsweise mittels Schraubverbindungen zu einer zusammenhängenden Baueinheit verbindbar sind. Vorzugsweise werden für die Verbindungen jedoch Verbindungsleisten 15a, b, c verwendet, wie sie in den Figuren 3, 4 dargestellt sind. Diese Verbindungsleisten 15a, b, c werden außen an die Seitenflächen der Stege 14 angelegt und mit diesen in nicht dargestellter Weise z.B. durch Schrauben verbunden. In Fig. 1 erkennt man, dass auch die Querträger 12b, c mit großflächigen Durchbrüchen versehen sind, so dass der Hohlwellenmotor 2 von der rechten Seite her zugänglich ist. Ein elektrisches Anschlusskabel für den Primärteil 7 des geschnitten dargestellten Linearmotors 6 ist mit dem Bezugszeichen 19b bezeichnet. Das Anschußkabel 19a gehört zu dem nicht sichtbaren Primärteil des zweiten Linearmotors.

Die Funktionsweise der erfindungsgemäßen Einspritzeinheit ist wie folgt. Während der Phase der Schmelzenansammlung im vorderen Teil des nicht dargestellten Schneckenzylinders wird die auf den Rädern 16 gelagerte Baueinheit mit den Trägern 11a, b, c und den Sekundärteilen 8a, b, c sowie dem Hohlwellenmotor 2 infolge des an der nicht dargestellten Einspritzdüse aufgebauten Schmelzendrucks zwangsläufig nach rechts verschoben. Im Bedarfsfall kann die Schnecke 1 durch die drei Linearmotoren 6 zur Erhöhung des Gegendrucks auf die Schmelze mit einer moderaten Vortriebskraft beaufschlagt werden, die bezogen auf die Darstellung in Fig. 1 nach links, also in Richtung der Einspritzdüse wirkt. Wenn sich genug Schmelzenmaterial im Schneckenzylinder angesammelt hat, werden die Linearmotoren 6 in der Weise elektrisch angesteuert, dass sie eine für den jeweils gewünschten Einspritzdruck ausreichende Vortriebskraft nach links erzeugen und die auf den Rädern 16 gelagerte Baueinheit mit der Schnecke 1 in Richtung der Einspritzdüse ruckartig verschieben. Hierdurch wird das angesammelte Schmelzenmaterial mit dem erforderlichen Einspritzdruck in das an die Einspritzdüse angeschlossene Spritzgießwerkzeug, das in den Figuren nicht dargestellt ist, eingespritzt. Die Linearmotoren 6 sind bezogen auf die Querschnittsfläche der Schnecke 1 großflächig ausgebildet und können daher einen erheblichen Einspritzdruck bewirken. Anstelle der vorzugsweise gewählten im Querschnitt dreieckigen Anordnung der Linearmotoren kann im Bedarfsfall selbstverständlich auch eine andere, vorzugsweise vieleckige. z.B. fünfeckige Form gewählt werden. Bezogen auf die Abmessungen des innerhalb der Anordnung der Linearmotoren befindlichen elektrischen Drehmotors liefert die Dreiecksanordnung jedoch bereits eine sehr große Wirkfläche für die Linearmotoren 6. Da für den elektrischen Drehmotor kein zusätzlicher Bauraum benötigt wird, kann mit der erfindungsgemäßen Einspritzeinheit eine besonders kurze axiale Baulänge realisiert werden.

### Bezugszeichenliste:

- 1: Schnecke
- 2: Drehmotor
- 3: Stator
- 4: Rotor
- 5: Hohlwelle
- 6: Linearmotor
- 7: Primärteil
- 8a, b, c: Sekundärteil
- 9: gehäuseartiges Paket
- 10: Linearführungen
- 11a, b, c: Träger
- 12a, b, c: Querträger
- 13: Ende der Seitenstege
- 14: Seitenstege des Aufnahmebetts
- 15a, b, c: Verbindungsleisten
- 16: Räder
- 17a, b, c: Aufnahmebett für Primärteil
- 18: Durchbruch
- 19a, b, c: elektrischer Anschluss

## Patentansprüche

1. Einspritzeinheit für eine Spritzgießmaschine zur Verarbeitung von Kunststoffen oder anderen plastifizierten Massen, mit einer Schnecke (1), die mit einem Drehantrieb mittels eines einen Stator (3) und einen Rotor (4) aufweisenden Drehmotors (2) versehen ist und durch eine Linearmotoranordnung (9) in axialer Richtung in einem Schneckenzylinder zur Ausübung der Einspritzfunktion bewegbar ist, wobei die Linearmotoranordnung (9) mehrere, separate, als Stator fungierende Primärteile (7) aufweist, die zu einem ersten gehäuseartigen Paket zusammengebaut sind, und wobei mehrere, separate, mit den Primärteilen (7) zusammenwirkende, linear bewegliche Sekundärteile (8a, b, c) vorgesehen sind, die mit der Schnecke (1) antriebstechnisch gekoppelt sind,
**dadurch gekennzeichnet,**
**dass** die Sekundärteile (8a, b, c) zu einem zweiten gehäuseartigen Paket zusammengebaut sind, das innerhalb des ersten gehäuseartigen Pakets linear beweglich ist, und
**dass** der mit der Schnecke (1) in axialer Richtung fest verbundene Drehmotor (2) innerhalb des zweiten gehäuseartigen Pakets angeordnet und mit seinem Stator (3) in axialer Richtung fest mit den Sekundärteilen (8a, b, c) gekoppelt ist.

2. Einspritzeinheit nach Anspruch 1,
**dadurch gekennzeichnet,**
**dass** der Drehmotor (2) ein elektrischer Motor, insbesondere ein Hohlwellenmotor mit einer Hohlwelle (5) ist.

3. Einspritzeinheit nach Anspruch 2,
**dadurch gekennzeichnet,**
**dass** der elektrische Drehmotor (2) ein Synchronmotor ist.

4. Einspritzeinheit nach einem der Ansprüche 1 bis 3,
**dadurch gekennzeichnet,**
**dass** das gehäuseartige Paket (9) aus drei Linearmotoren (6) besteht.

5. Einspritzeinheit nach Anspruch 4,
**dadurch gekennzeichnet,**
**dass** das gehäuseartige Paket (9) im axialen Querschnitt im Wesentlichen die Form eines gleichseitigen Dreiecks aufweist.

6. Einspritzeinheit nach einem der Ansprüche 1 bis 5,
**dadurch gekennzeichnet,**
**dass** die Sekundärteile (8a, b, c) durch Verbindungselemente (Querträger 12) zu einer selbsttragenden Baugruppe zusammengebaut sind.

7. Einspritzeinheit nach Anspruch 6,
**dadurch gekennzeichnet,**
**dass** die Sekundärteile (8a, b, c) jeweils auf einem in Linearführungen (10) geführten Träger (11) angeordnet sind.

8. Einspritzeinheit nach Anspruch 7,
**dadurch gekennzeichnet,**
**dass** der Träger (11) jeweils als Schlitten und die Linearführungen (10) als Gleitschienen ausgebildet sind.

9. Einspritzeinheit nach Anspruch 7,
**dadurch gekennzeichnet,**
**dass** der Träger (11) jeweils über Wälzkörper auf den Linearführungen (10) abgestützt ist.

10. Einspritzeinheit nach Anspruch 7,
**dadurch gekennzeichnet,**
**dass** der Träger (11) jeweils als Wagen mit Rädern (16) ausgebildet ist.

11. Einspritzeinheit nach einem der Ansprüche 7 bis 10,
**dadurch gekennzeichnet,**
**dass** die Verbindungselemente als in axialer Richtung im Abstand hintereinander angeordnete plattenförmige Querträger (12) ausgebildet sind, die senkrecht zur Längsachse der Linearmotoren (6) angeordnet sind.

12. Einspritzeinheit nach Anspruch 11,
**dadurch gekennzeichnet,**
**dass** der elektrische Drehmotor (2) an dem in Einspritzrichtung vordersten Querträger (12) befestigt ist, der mit einem Durchbruch (18) für die Abtriebswelle (5) des Drehmotors (2) oder die Schnecke (1) versehen ist.

13. Einspritzeinheit nach einem der Ansprüche 1 bis 12,
**dadurch gekennzeichnet,**
**dass** die Primärteile (7) der Linearmotoren (6) jeweils am Boden eines im Querschnitt U-förmigen Aufnahmebetts (17) befestigt sind und die Enden der zueinander parallelen Seitenstege (14) der U-Form des Aufnahmebetts (17) die Linearführungen (10) bilden.

14. Einspritzeinheit nach Anspruch 13,
**dadurch gekennzeichnet,**
**dass** die Aufnahmebetten (17) durch außen an den Seitenstegen (14) anliegende Verbindungsleisten (15) fest untereinander verbunden sind.

## Claims

1. Injection unit for an injection moulding machine for processing plastics material or other plasticised compounds, having a worm (1), which is provided with a rotary drive by means of a torque motor having a stator (3) and a rotor (4) and is movable in the axial direction in a worm cylinder for exerting the injection function by a linear motor arrangement (9), the linear motor arrangement (9) having plural separate primary parts (7) operating as a stator, which are assembled into a first housing-like package, and wherein plural separate linearly moving secondary parts (8a, b, c) are provided which cooperate with the primary parts (7) and are coupled drivingly to the worm (1), **characterised in that** the secondary parts (8a, b, c) are assembled into a second housing-like package, which is linearly movable inside the first housing-like package, and **in that** the torque motor (2) rigidly connected to the worm (1) in the axial direction is disposed inside the second housing-like package and is coupled with its stator (3) rigidly to the secondary parts (8a, b, c) in the axial direction.

2. Injection unit according to claim 1, **characterised in that** the torque motor (2) is an electric motor, in particular a quill drive with a quill (5).

3. Injection unit according to claim 2, **characterised in that** the electric torque motor (2) is a synchronous motor.

4. Injection unit according to one of claims 1 to 3, **characterised in that** the housing-like package (9) consists of three linear motors (6).

5. Injection unit according to claim 4, **characterised in that** the housing-like package (9) has substantially the form of an equilateral triangle.

6. Injection unit according to one of claims 1 to 5, **characterised in that** the secondary parts (8a, b, c) are assembled by connecting elements (transverse supports 12) to form a self-supporting assembly.

7. Injection unit according to claim 6, **characterised in that** the secondary parts (8a, b, c) are disposed respectively on a support (11) guided in linear guides (10).

8. Injection unit according to claim 7, **characterised in that** the support (11) is formed as a slide and the linear guides (10) as slide rails.

9. Injection unit according to claim 7, **characterised in that** the support (11) is respectively supported on the linear guides (10) via roller bodies.

10. Injection unit according to claim 7, **characterised in that** the support (11) is formed as a respective carriage with wheels (16).

11. Injection unit according to one of claims 7 to 10, **characterised in that** the connecting elements are formed as plate-like transverse supports (12) which are disposed consecutively and are spaced in the axial direction, and which are disposed perpendicular to the longitudinal axis of the linear motors (6).

12. Injection unit according to claim 11, **characterised in that** the electric torque motor (2) is fixed to the front-most transverse support (12) in the injection direction, which support is provided with a perforation (18) for the output shaft (5) of the torque motor (2) or for the worm (1).

13. Injection unit according to one of claims 1 to 12, **characterised in that** the primary parts (7) of the linear motors (6) are respectively fixed to the base of a receiving bed (17) of U-shaped cross-section and the ends of the mutually parallel side webs (14) of the U-shape of the receiving bed (17) form the linear guides (10).

14. Injection unit according to claim 13, **characterised in that** the receiving beds (17) are rigidly connected together by connecting strips (15) abutting the outside of the side webs (14).

## Revendications

1. Unité d'injection pour une machine de moulage par injection pour la transformation de matières plastiques ou autres masses plastifiées, comprenant une vis sans fin (1) qui est munie d'un entraînement rotatif au moyen d'un moteur rotatif (2) comportant un stator (3) et un rotor (4) et qui est mobile par un agencement de moteurs linéaires (9) dans la direction axiale dans un cylindre de vis pour exercer la fonction d'injection, l'agencement de moteurs linéaires (9) comportant plusieurs pièces primaires séparées (7) faisant fonction de stator qui sont assemblées en un premier ensemble du type d'un carter et plusieurs pièces secondaires séparées (8a, b, c), mobiles linéairement et coopérant avec les pièces primaires (7), étant prévues, lesquelles sont couplées du point de vue de la technique d'entraînement avec la vis sans fin (1),
**caractérisée en ce que** les pièces secondaires (8a, b, c) sont assemblées en un deuxième ensemble du type d'un carter qui est mobile linéairement à l'intérieur du premier ensemble du type d'un carter et **en ce que** le moteur rotatif (2) relié de manière fixe à la vis sans fin (1) dans le sens axial est agencé à l'intérieur du deuxième ensemble du type d'un carter et couplé de manière fixe aux pièces secondaires (8a, b, c) avec son stator (3) dans le sens axial.

2. Unité d'injection selon la revendication 1,
**caractérisée en ce que** le moteur rotatif (2) est un moteur électrique, en particulier un moteur à arbre creux avec un arbre creux (5).

3. Unité d'injection selon la revendication 2,
**caractérisée en ce que** le moteur rotatif électrique (2) est un moteur synchrone.

4. Unité d'injection selon l'une des revendications 1 à 3,
**caractérisée en ce que** l'ensemble du type d'un carter (9) est constitué de trois moteurs linéaires (6).

5. Unité d'injection selon la revendication 4,
**caractérisée en ce que** l'ensemble du type d'un carter (9) présente en coupe axiale essentiellement la forme d'un triangle équilatéral.

6. Unité d'injection selon l'une des revendications 1 à 5,
**caractérisée en ce que** les pièces secondaires (8a, b, c) sont assemblées par des éléments de liaison (traverses 12) pour former un groupe de construction autoporteur.

7. Unité d'injection selon la revendication 6,
**caractérisée en ce que** les pièces secondaires (8a, b, c) sont agencées chacune sur un support (11) guidé dans des guidages linéaires (10).

8. Unité d'injection selon la revendication 7,
**caractérisée en ce que** chacun des supports (11) est conçu comme un coulisseau et les guidages linéaires (10) comme des glissières.

9. Unité d'injection selon la revendication 7,
**caractérisée en ce que** chacun des supports (11) est appuyé sur les guidages linéaires (10) par l'intermédiaire de corps de roulement.

10. Unité d'injection selon la revendication 7,
**caractérisée en ce que** chacun des supports (11) est conçu comme un chariot avec des roues (16).

11. Unité d'injection selon l'une des revendications 7 à 10,
**caractérisée en ce que** les éléments de liaison sont conçus comme des traverses (12) en forme de plaques disposées à distance l'une derrière l'autre dans la direction axiale, lesquelles sont agencées perpendiculairement à l'axe longitudinal des moteurs linéaires (6).

12. Unité d'injection selon la revendication 11,
**caractérisée en ce que** le moteur rotatif électrique (2) est fixé sur la traverse (12) qui est située le plus en avant dans la direction d'injection et est munie d'une traversée (18) pour l'arbre de sortie (5) du moteur rotatif (2) ou la vis sans fin (1).

13. Unité d'injection selon l'une des revendications 1 à 12,
**caractérisée en ce que** les pièces primaires (7) des moteurs linéaires (6) sont fixées chacune au fond d'un lit de logement (17) de section en forme de U et les extrémités des barres latérales (14) parallèles entre elles de la forme en U du lit de logement (17) forment les guidages linéaires (10).

14. Unité d'injection selon la revendication 13,
**caractérisée en ce que** les lits de logement (17) sont reliés entre eux de manière fixe par des bandes de liaison (15) adjacentes extérieurement aux barres latérales (14).
